# EUROPÄISCHE PATENTANMELDUNG

(11) **EP 2 174 700 A1**
(43) Veröffentlichungstag der Anmeldung: **14.04.2010**
(21) Anmeldenummer: 08017913.8
(22) Anmeldetag: 13.10.2008
(51) Int. Cl.: B01D 53/14

(54) **Absorptionsmittel, Verfahren zur Herstellung eines Absorptionsmittels sowie Verwendung eines Absorptionsmittels**

(71) Anmelder: Siemens Aktiengesellschaft, 80333 München (DE)
(72) Erfinder: Joh, Ralph Dr., 63500 Seligenstadt (DE); Schneider, Rüdiger Dr., 65817 Eppstein (DE)

(57) **Zusammenfassung**

Die Erfindung betrifft ein Absorptionsmittel, insbesondere zur Abscheidung von Kohlendioxid aus dem aus dem Rauchgas einer fossil befeuerten Verbrennungseinrichtung. Das Absorptionsmittel umfasst ein Zweikomponentengemisch mit einer freien Aminosäure und einem Aminosäuresalz, wobei bezogen auf die molare Konzentration die freie Aminosäure einen Überschuss gegenüber dem Aminosäuresalz aufweist. Hierdurch ist eine Variabilität des pkB-Wertes erzielt, der durch unterschiedliche Temperaturen des Absorptions- und Desorptionsprozesses erreicht werden kann. Die Erfindung betrifft weiterhin ein Verfahren zur Herstellung des Absorptionsmittels sowie eine Verwendung, insbesondere zur Abscheidung von Kohlendioxid aus Kraftwerksanlagen.

## Beschreibung

Die Erfindung betrifft ein Absorptionsmittel, insbesondere für die selektive Absorption von Kohlendioxid aus dem Rauchgas einer Verbrennungsanlage. Die Erfindung betrifft weiterhin ein Verfahren zur Herstellung eines Absorptionsmittels sowie eine Verwendung.

Bei fossil befeuerten Kraftwerksanlagen zur Erzeugung elektrischer Energie in großtechnischem Maßstab entsteht durch die Verbrennung eines fossilen Brennstoffs ein kohlendioxidhaltiges Abgas. Neben Kohlendioxid enthält das Abgas weitere Verbrennungsprodukte wie z.B. die Gase Stickstoff, Schwefeldioxid, Stickstoffoxid und Wasserdampf sowie Festkörperpartikel, Stäube und Ruß. Das Abgas wird nach einer weitgehenden Abscheidung der Festkörperbestandteile in die Atmosphäre entlassen, das sich in der Atmosphäre ansammelnde Kohlendioxid behindert die Wärmeabstrahlung unserer Erde und begünstigt durch den sogenannten Treibhauseffekt eine Erhöhung der Erdoberflächentemperatur.

Um eine Reduzierung der Kohlendioxidemission bei fossil befeuerten Kraftwerksanlagen zu erreichen, kann Kohlendioxid aus dem Abgas abgetrennt werden.

Zur Abtrennung von Kohlendioxid aus einem Gasgemisch sind insbesondere aus der chemischen Industrie verschiedene Methoden bekannt. Insbesondere zum Abtrennen von Kohlendioxid aus einem Abgas nach einem Verbrennungsprozess (Post Combustion CO₂-Separation) ist die Methode der "Absorption-Desorption" oder der Tieftemperaturabscheidung ("Cryogenic") bekannt.

In großtechnischem Maßstab wird das beschriebene Abtrennen von Kohlendioxid mit dem Absorptions-Desorptionsverfahren mit einem Waschmittel durchgeführt. Mit einem klassischen Absorptions-Desorptions-Prozess wird das Abgas in einer Absorptionskolonne mit einem selektiven Lösungsmittel als Waschmittel in Kontakt gebracht, dabei erfolgt die Aufnahme von Kohlendioxid durch einen chemischen oder physikalischen Prozess.

Das mit Kohlendioxid beladene Lösungsmittel wird zur Abtrennung des Kohlendioxids und Regenerierung des Lösungsmittels in eine Desorptionskolonne geleitet, die Abtrennung in der Desporptionskolonne kann thermisch erfolgen. Dabei wird aus dem beladenen Lösungsmittel ein Gas-Dampfgemisch aus gasförmigen Kohlendioxid und verdampftem Lösungsmittel ausgetrieben. Das verdampfte Lösungsmittel wird anschließend von dem gasförmigen Kohlendioxid separiert. Das Kohlendioxid kann nun in mehreren Stufen verdichtet, gekühlt und verflüssigt werden. In flüssigem oder gefrorenem Zustand kann das Kohlendioxid dann einer Lagerung oder Verwertung zugeführt werden. Das regenerierte Lösungsmittel wird Absorberkolonne zurückgeleitet, wo es wieder Kohlendioxid aus dem kohlendioxidhaltigen Abgas aufnehmen kann.

Ein Hauptproblem bei den existierenden Verfahren zum Abtrennen von Kohlendioxid aus einem Gasgemisch ist insbesondere der sehr hohe Energieaufwand, der in Form von Heizenergie für die Desorption benötigt wird. Um diesem Problem entgegen zu wirken, sind aus dem Stand der Technik eine Reihe von Vorschlägen bekannt.

Bei Gaswäschen in der chemischen Industrie werden häufig physikalische Waschmittel eingesetzt. Bei der CO₂-Abtrennung mit physikalischen Waschmitteln müssen als Nachteile jedoch vergleichsweise geringe Kapazitäten und Selektivitäten des Absorptionsmittels in Kauf genommen werden. Daher kommen physikalische Wäschen nur bei vergleichsweise hohen Partialdrücken in Betracht und scheiden daher für die Post Combustion Capture-Prozesse aus. Bei den sogenannten chemischen Waschmittel kann aufgrund der beteiligen chemischen Reaktionen eine wesentlich höhere Beladung des Absorptionsmittels mit Kohlendioxid erreicht werden. Dabei wird das saure Gas Kohlendioxid mit einer Base gebunden. Als basische Reaktionspartner kommen z.B. Aminoverbindungen in Betracht. Dabei spielt die Basizität bzw. der Wert für die Basenstärke (pkB-Wert) eine entscheidende Rolle für die CO₂-Kapazität und die Desorptionsenergie. Je höher der pkB-Wert, desto weiter liegt das Reaktionsgleichgewicht auf der Seite der gebildeten Carbamate und Bicarbonat/Hydrogencarbonate. Als Folge resultiert jedoch auch eine stärkere Bindung und damit eine höhere Reaktionsenthalpie die bei der Desorption wieder aufgebracht werden muss. Das Resultat dieser gegenläufigen Effekte musst bisher immer als gegeben akzeptiert werden, so dass insbesondere bei den reaktiven Wasch- bzw. Lösungsmitteln ein hoher Energieeinsatz für den Desorptionsprozess in der Desorberkolonne erforderlich war, was auf Kosten der Anlageneffizienz der Kraftwerksanlage geht.

Eine Aufgabe der Erfindung ist es daher ein Absorptionsmittel anzugeben, welches gegenüber dem bisher bekannten Absorptionsmitteln eine deutlich verbesserte energetische Bilanz aufweist. Eine weitere Aufgabe der Erfindung besteht in der Angabe eines Herstellverfahrens zur Herstellung des Absorptionsmittels. Eine weitere Aufgabe besteht in der Angabe einer Verwendung.

Die auf ein Absorptionsmittel gerichtete Aufgabe wird erfindungsgemäß gelöst durch ein Absorptionsmittel, insbesondere für die selektive Absorption von Kohlendioxid aus dem Rauchgas einer Verbrennungsanlage, enthaltend eine Mischung aus einem nebeneinander vorliegenden Aminosäuresalz und einer freien Aminosäure.

Die Erfindung geht dabei von der Erkenntnis aus, dass eine besonders erfolgversprechende Klasse von Aminoverbindungen für die Absorption von Kohlendioxid solche Aminosäuren sind, die mit einer äquimolaren Menge an anorganischer Base (in der Regel Kaliumhydroxid KOH) in das entsprechende Aminosäuresalz überführt werden. Aminosäuren, genauer gesagt Aminocarbonsäuren, sind eine Klasse von kleinen organischen Verbindungen mit mindestens einer Carboxylgruppe (-COOH) und mindestens einer Aminogruppe (-NH₂). Als Aminogruppe wird in der organischen Chemie die funktionelle Gruppe (-NH₂) der primären Amine und Aminosäuren verstanden. Die Aminogruppe ist eine basische funktionelle Gruppe, da das freie Elektronenpaar am Stickstoffatom - analog zu dem im Ammoniak-Molekül ein Proton von einer Säure aufnehmen kann. In wässriger Lösung liegen Aminosäuren als sogenannte Zwitterionen vor, d.h. die Aminogruppe ist protoniert und die Carboxylgruppe ist deprotoniert. Dabei wirkt die Aminogruppe als Base, da sie ein Proton aufnimmt (Protonenakzeptor). Die Carboxylgruppe wirkt als Säure, da sie ein Proton abgibt, Protonendonator). Diese besondere Eigenschaft der Aminosäuren macht sich auch vorliegende Erfindung zu Nutze.

Eine freie, d.h. nicht mit Kaliumhyroxid versetzte, Aminosäure kann sowohl als Säure als auch als Base fungieren und ist im pkB-Wert variabel. Die vorliegende Erfindung macht sich zu Nutze, dass bei Aminosäuren der pkB-Wert temperaturabhängig ist. Liegt also neben dem bisher eingesetzten (reinen Aminosäuresalz auch freie Aminosäure in dem Absorptionsmittel vor, so wird durch den Temperaturunterschied zwischen Absorber und Desorber eine Variation des pkB-Wertes des Absorptionsmittels erreicht, wobei im kalten Absorber ein hoher pkB-Wert erreicht wird, was die Absorption begünstigt und im heißen Desorber resultiert ein niedriger pkB-Wert, wodurch für die Desorption weniger Energie aufgebracht werden muss. Durch die koexistierende Mischung von Aminosäuresalz und einer freien Aminosäure ist eine Einstellbarkeit des pkB-Wertes durch Temperaturvariation möglich, wobei der Effekt, dass bei exothermen Lösungsvorgängen die Löslichkeit mit steigender Temperatur abnimmt, gezielt genutzt wird.

In einer besonders bevorzugten Ausgestaltung des Absorptionsmittels enthält dieses eine nicht-äquimolare Mischung des Aminosäuresalzes und der freien Aminosäure. Bevorzugt ist hierbei ein Überschuss an freier Aminosäure in der Mischung gegenüber der Konzentration des Aminosäuresalzes gegeben. Weiter bevorzugt liegt die Mischung in wässriger Lösung vor.

In bevorzugter Ausgestaltung des Absorptionsmittels weist dieses eine mit steigender Temperatur abnehmende Basenstärke (pkB-Wert) auf.

Bei einer besonders bevorzugte Ausgestaltung weist das Aminosäuresalz einen Substituenten auf, wobei der Substituent eine Verbindung aus der Gruppe Wasserstoff, Alkyl, Hydroxyalkyl oder Aminoalkyl ist.

Vorzugsweise weist das Aminosäuresalz einen weiteren Substituenten auf, wobei der weitere Substituent aus der Gruppe von Wasserstoff, Alkyl, Hydroxyalkyl oder Halogenalkyl entnommen ist.

Das Absorptionsmittel ist in einer weiter bevorzugten Ausgestaltung **dadurch gekennzeichnet, dass** das Aminosäuresalz ein Salz eines Metalls ist, insbesondere ein Salz eines Alkalimetalls mit einem Element aus der Gruppe Kalium oder Natrium, wobei in dem Aminosäuresalz in der Carboxylgruppe der Wasserstoff durch das Metall ersetzt ist.

In einer weiter bevorzugten Ausgestaltung des Absorptionsmittels weist die Aminosäure weitere Substituenten auf, wobei der weitere Substituent aus der Gruppe von Wasserstoff, Alkyl, Hydroxyalkyl oder Halogenalkyl entnommen ist.

Die gemäß der Erfindung verwendbaren Aminosäuren können somit einer allgemein gültigen Form beschrieben werden. Dabei sind die oben genannten Substituenten des Aminosäuresalzes und der Aminosäure bei Zugabe einer zusätzlichen Aminosäure beim Aminosäuresalz und der freien Aminosäure nicht unbedingt identisch d.h., in einem spezifischen Absorptionsmittel kann das Aminosäuresalz und die Aminosäure im Überschuss mit jeweils unterschiedlichen Substituenten vorliegen. Durch die Ausgestaltung des Absoptionsmittels als Gemisch aus einem Aminosäuresalz und einer freien Aminosäure, die vorzugsweise in wässriger Lösung koexistent vorliegen, ist erstmals ein Absorptionsmittel gegeben, was in besonders vorteilhafter Weise in einem Absorptions-Desorptions-Prozess für die Abscheidung von Kohlendioxid aus dem Rauchgas einer Verbrennungsanlage eingesetzt werden kann. Hierbei ist eine besonders günstige energetische Bilanz des Gesamtreinigungsprozesses im Absorptions- und im Desorptionsbereich gegeben.

Die auf ein Verfahren zur Herstellung eines Absorptionsmittels gerichtete Aufgabe wird erfindungsgemäß dadurch gelöst, dass durch äquimolare Zugabe einer Lauge zu einer Aminosäure die Aminosäure vollständig in ein Aminosäuresalz überführt wird, und durch eine weitere Zugabe einer Aminosäure eine Mischung aus Aminosäuresalz und freier Aminosäure hergestellt wird, so dass Aminosäuresalz und freie Aminosäure koexistent vorliegen.

Bevorzugt ist das Verfahren in wässriger Lösung durchgeführt, so dass eine wässrige Lösung Aminosäuresalz und freie Aminosäure im Überschuss koexistent vorliegt.

Statt die Aminosäure durch eine äquimolere Zugabe von Lauge vollständig in das Aminosäuresalz zu überführen, kann auch durch eine kleinere Zugabe an Lauge eine Mischung aus Aminosäuresalz und freier Aminosäure hergestellt werden. Eine weitere Möglichkeit ist die Zugabe einer zusätzlichen Aminosäure in eine bereits vorliegende äquimolare Mischung. Durch das nebeneinander Vorliegen von Aminosäuresalz und freier Aminosäure wird ein variabler pkB-Wert erzielt, der die Absorption von Kohlendioxid bei niedriger Temperatur begünstigt und die Desorption bei hoher Temperatur verbessert.

Die auf eine Verwendung gerichtete Aufgabe der Erfindung wird gelöst durch eine Verwendung eines Absorptionsmittels enthaltend eine Mischung aus einem nebeneinander vorliegenden Aminosäuresalz und einer freien Aminosäure zur Absorption von Kohlendioxid aus dem Rauchgas einer Verbrennungsanlage.

Bei der Verwendung wird zunächst da Absorptionsmittel vorzugsweise mit kohlendioxidhaltigem Abgas in Kontakt gebracht, so dass Kohlendioxid in dem Absorptionsmittel gelöst wird, so dass ein beladenes Absorptionsmittel gebildet wird, und bei der anschließend Kohlendioxid aus beladenem Absorptionsmittel thermisch desorbiert wird.

In einer besonders bevorzugten Ausgestaltung der Verwendung wird diese bei der Absorption von Kohlendioxid aus dem Rauchgas mit dem Absorptionsmittel bei einer niedrigeren Temperatur als die Desorption durchgeführt. Durch diese besonders vorteilhafte Ausgestaltung der Verwendung ist erreicht, dass unter Ausnutzung des temperaturabhängigen pkB-Wertes des Absorptionsmittels in dem Absorptions- bzw. Desorptionsprozess insgesamt eine besonders günstige Energiebilanz erreicht ist, so dass bei einer Integration einer Kohlendioxid-Abscheidevorrichtung in eine Kraftwerksanlage ein vergleichsweise hoher Wirkungsgrad erreichbar ist.

In besonders bevorzugter Ausgestaltung der Verwendung wird diese bei einer Absorption von Kohlendioxid aus dem Rauchgas einer fossil befeuerten Dampfkraftwerksanlage, aus dem Abgas einer Gasturbinenanlage oder aus dem Abgas einer kombinierten Gas- und Dampfturbinenanlage oder einer IGCC-Anlage angewendet.

Nachfolgend werden Ausführungsbeispiele der Erfindung anhand der beigefügten Zeichnung näher erläutert. Es zeigt:
- FIG 1: eine allgemein gültige Formulierung des Aminosäuresalzes als ein Bestandteil in dem Gemisch des erfindungsgemäßen Absorptionsmittels,
- FIG 2: eine allgemein gültige Formulierung der freien Aminosäure als weiterer Bestandteil in dem Gemisch für das erfindungsgemäße Absorptionsmittel
- FIG 3: eine schematische Darstellung einer Abscheidevorrichtung für Kohlendioxid aus dem Rauchgas einer Verbrennungsanlage.

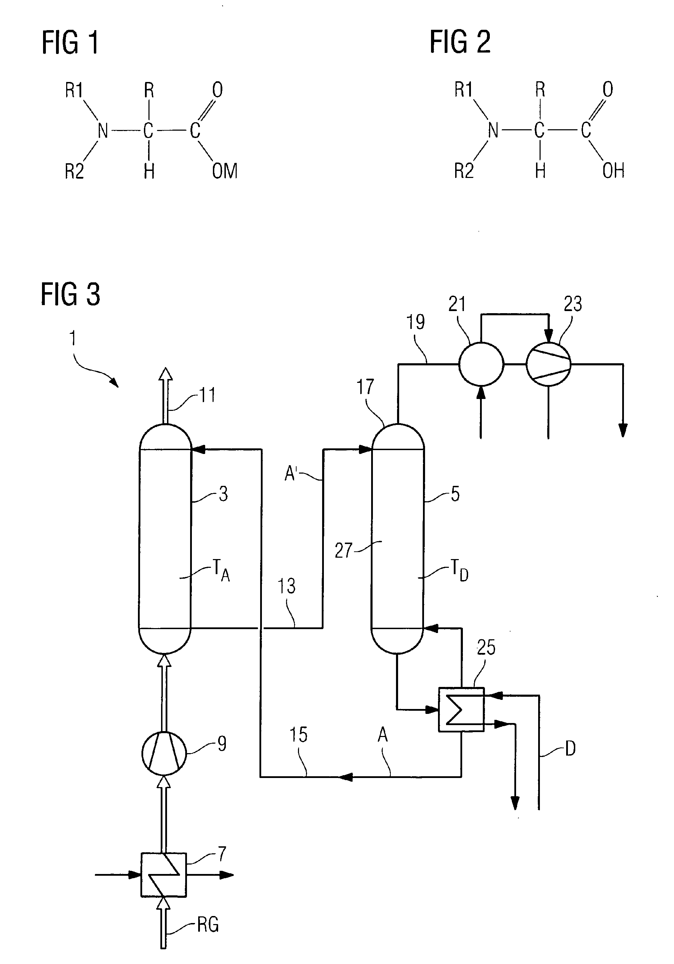

In FIG 1 ist ein Aminosäuresalz dargestellt, welches Substituenten R,R1 und R2 aufweist. Der Substituent R ist eine Verbindung aus der Gruppe von Wasserstoff, Alkyl, Hydroxyalkyl oder Aminoalkyl. Die weiteren Substituenten R1,R2 sind aus der Gruppe von Wasserstoff, Alkyl, Hydroxyalkyl oder Halogenalkyl entnommen. Das Aminosäuresalz ist ein salz eines Metalls M, insbesondere ein Salz eines Alkalimetalls mit einem Element aus der Gruppe Kalium, Natrium, wobei in dem Aminosäuresalz in der Carboxylgruppe der Wasserstoff H durch das Metall M ersetzt ist.

In FIG 2 ist in chemischer Nomentatur eine freie Aminosäure dargestellt, wie sie als zweiter Bestandteil der Mischung für das Absorptionsmittel eingesetzt ist. Die Aminosäure weist eine Carboxylgruppe -COOH und mindestens eine Aminogruppe -NH₂ auf. Die freie Aminosäure weist einen Substituenten R auf, wobei der Substituent R eine Verbindung aus der Gruppe von Wasserstoff, Alkyl, Hydroxyalkyl oder Aminoalkyl ist.

Die freie Aminosäure weist weitere Substituenten R1,R2 auf, wobei der weitere Substituent R1,R2 aus der Gruppe von Wasserstoff, Alkyl, Hydroxyalkyl oder Halogenalkyl entnommen ist.

Eine Herstellung des Absorptionsmittels kann dadurch erfolgen, dass zunächst Aminosäure durch äquimolare Zugabe einer Lauge, z.B. Kaliumhydroxid, vollständig in ein Aminosäuresalz überführt wird. In einem weiteren Schritt wird durch weitere Zugabe einer Aminosäure eine Mischung aus Aminosäuresalz und freier Aminosäure hergestellt, so dass Aminosäuresalz und freie Aminosäure koexistent vorliegen. In einer Alternative zu der äquimolaren Zugabe von Lauge und der vollständigen Umwandlung in das Aminosäuresalz kann auch eine kleinere Zugabe an Lauge eine Mischung aus Aminosäuresalz und freier Aminosäure hergestellt werden. Eine weitere Möglichkeit ist die Zugabe einer zusätzlichen Aminosäure. Durch diese nicht-äquimolare Mischung aus Aminosäuresalz und freier Aminosäure ist ein variabler pkB-Wert erzielt, dessen Temperaturverhalten die Absorption von CO₂ bei niedriger Temperatur begünstigt und die Desorption bei hoher Temperatur energetisch deutlich verbessert.

In FIG 3 ist in schematischer Darstellung ein Anlagenschaltbild einer Abscheidevorrichtung 1 dargestellt. Die Abscheidevorrichtung 1 weist eine Absorptionseinrichtung 3 und eine der Absorptionseinrichtung zugeordnete Desorptionseinrichtung 5 auf. Der Desorptionseinrichtung 5 ist ein Reboiler 25 zugeordnet, dem im Betriebsfall ein Prozessdampf D zur Bereitstellung von Wärme zustellbar ist. Die Desorptionseinrichtung 5 weist einen Kopfbereich 17 des Desorbers auf, an die eine Gasleitung 19 für CO₂-reiches Gas angeschlossen ist. In die Gasleitung 19 ist ein Wärmetauscher 21 sowie Tauscher 80 nach Dichtereinheit 23 zur Verdichtung des Kohlendioxids bzw. des kohlendioxidreichen Gases vorgesehen. Die Absorptionseinrichtung 3 ist über eine Leitung 13 mit der Desorptionseinrichtung 5 verbunden. Die Desorptionsvorrichtung 5 über eine Leitung 15 über den Reboiler 25 mit der Absorptionseinrichtung 3 verbunden.

Im Betrieb der Abscheidevorrichtung 1 wird Rauchgas RG aus einer fossil befeuerten Verbrennungsanlage, die in FIG 3 nicht näher dargestellt ist, zunächst in einem Rauchgaskühler 7 abgekühlt und anschließend über die Fördereinrichtung 9 der Absorptionseinrichtung 3 zugestellt. Nach dem Gegenstromprinzip wird in entgegengesetzter Richtung zu dem Rauchgasstrom RG in der Absorptionseinrichtung 3 ein regeneriertes Absorptionsmittel A geführt. Das regenerierte Absorptionsmittel A wird hierbei über die Leitung 15 geführt, die den Reboiler 25 mit der Absorptionseinrichtung 3 strömungstechnisch verbindet. Auf diese Weise kann in dem Reboiler 25 regeneriertes Absorptionsmittel A der Absorptionseinrichtung 3 zugeführt werden. Das Absorptionsmittel umfasst in einer wässrigen Lösung ein Gemisch aus einem Aminosäuresalz und einer freien Aminosäure, so dass bei einer Absorptionstemperatur T_{A} in dem Absorptionsprozess eine Basizität erreicht ist, so dass eine entsprechend hohe Löslichkeit des Kohlendioxids aus dem Rauchgas RG in dem Absorptionsmittel A erzielt ist. Durch das nebeneinander Vorliegen von Aminosäuresalz und freier Aminosäure wird ein variabler pkB-Wert erzielt, der die Absorption von Kohlendioxid bei niedriger Temperatur T_{A} in der Absorptionseinrichtung 3 begünstigt und die Desorption bei hoher Temperatur T_{D} in der Desorptionseinrichtung 5 verbessert. Hierbei wird sich der Effekt zu Nutze gemacht, dass bei exothermen Lösungsvorgängen die Löslichkeit mit steigender Temperatur abnimmt. Das gemäß der Erfindung bereitgestellte Absorptionsmittel A aus einem Gemisch von Aminosäuresalz und freier Aminosäure ist in besonderer Weise für diesen Absorptions-Desorptionsprozess konfektioniert und geeignet, so dass bei einer Integration der Abscheidevorrichtung 1 in eine Kraftwerksanlage ein hoher Wirkungsgrad erreicht ist. Die Abscheideeffizienz ist dabei deutlich gegenüber den herkömmlichen Absorptionsmitteln verbessert. Das von Kohlendioxid weitgehend befreite Abgas 11 verlasst die Abvorbereinrichtung durch einen nicht näher dargestellten Kamin.

Durch den Absorptionsprozesse mit dem Absorptionsmittel A in der Absorptionseinrichtung 3 wird das Absorptionsmittel A mit Kohlendioxid CO₂ beladen, so dass ein beladenes Absorptionsmittel A' gebildet ist. Das beladene Absorptionsmittel A' wird über die Leitung 13 von der Absorptionseinrichtung 3 zu der Desorptionseinrichtung 5 geführt. In der Desorptionseinrichtung 5 wird das mit Kohlendioxid beladene Absorptionsmittel A' wieder von Kohlendioxid befreit. Diese Desorption wird üblicherweise durch thermisches Austreiben des Kohlendioxids aus dem Absorptionsmittel A' durchgeführt. Im Kopfbereich 17 der Desorptionseinrichtung 5 wird über die Gasleitung 19 kohlendioxidreiches Gas aus der Desorptionseinrichtung 5 zunächst abgeleitet und über einen Wärmetauscher 21 sowie einen sich an den Wärmetauscher 21 anschließenden Verdichter 23 geführt. Das so abgeschiedene Kohlendioxid wird in dem Verdichter 23 verdichtet und für weitere Zwecke verwendet, z.B. Injektion in eine Aquifere oder einen anderweitigen CO₂-Speicher.

Der Desorptionsprozess in der Desorptionseinrichtung 5 erfolgt bei einer Desorptionstemperatur T_{D} die höher ist als die Absorptionstemperatur T_{A}. Mit dem erfindungsgemäßen Absorptionsmittel A ist ein variabler pkB-Wert erzielt, der mit dem Temperatur des Prozesses variiert, so dass der pkB-Wert im Bereich der Absorption höher ist als im Bereich der Desorption. Auf diese Weise wird die Absorption begünstigt und im heißeren Desorber resultiert ein niedrigerer pkB-Wert, wodurch für die Desorption weniger Desorptionsenergie aufgebracht werden muss. Das thermische Austreiben des Kohlendioxids aus beladenem Absorptionsmittel A' kann daher unter deutlich geringerem Energieeinsatz erfolgen.

In besonderer Weise ist die gezeigte Abscheidevorrichtung 1 mit dem erfindungsgemäßen Absorptionsmittel A geeignet in einer Kraftwerksanlage, z.B. einer Dampfkraftwerksanlage, einer Gasturbinenanlage, einer kombinierten Gas- und Dampfturbinenanlage, oder in einer Gas- und Dampfturbinenanlage mit integrierter Kohlevergasung eingesetzt zu werden. Auf dem Weg zur Entwicklung eines CO₂-freie Kraftwerks zeigt die Erfindung hier durch die Wahl des Absorptionsmittels einen Weg auf, wie der Absorptions-Desorptionsprozess in effizienter Weise in einen bestehenden Kraftwerksprozess integriert werden kann. Dies ist auch besonders vorteilhaft im Hinblick auf Kraftwerksmodernisierungen und Upgrades, bei denen eine konventionelle Kraftwerksanlage die mit CO₂-Emissionen behaftet ist, durch den zusätzlichen Einbau einer Abscheidevorrichtung für Kohlendioxid besonders klimafreundlich ausgerüstet bzw. umgerüstet werden kann.

## Patentansprüche

1. Absorptionsmittel, insbesondere für die selektive Absorption von Kohlendioxid aus einem Rauchgas einer Verbrennungsanlage, enthaltend eine Mischung aus einem nebeneinander vorliegenden Aminosäuresalz und einer freien Aminosäure.

2. Absorptionsmittel nach Anspruch 1,
**gekennzeichnet durch** eine nicht-äquimolare Mischung des Aminosäuresalzes und der freien Aminosäure.

3. Absorptionsmittel nach Anspruch 1 oder 2, **gekennzeichnet durch** einen Überschuss an freier Aminosäure in der Mischung.

4. Absorptionsmittel nach Anspruch 1, 2 oder 3,
**dadurch gekennzeichnet, dass** die Mischung in wässriger Lösung vorliegt.

5. Absorptionsmittel nach einem der vorhergehenden Anspruch 4, **gekennzeichnet durch** eine mit steigender Temperatur abnehmende Basenstärke (pkB) der Lösung.

6. Absorptionsmittel nach einem der vorhergehenden Ansprüche, **dadurch gekennzeichnet, dass** das Aminosäuresalz einen Substituenten (R) aufweist, wobei der Substituent (R) eine Verbindung aus der Gruppe der Wasserstoff, Alkyl, Hydroxyalkyl oder Aminoalkyl ist.

7. Absorptionsmittel nach einem der vorhergehenden Ansprüche, **dadurch gekennzeichnet, dass** das Aminosäuresalz weitere Substituenten (R1, R2) aufweist, wobei der weitere Substituent (R1, R2) aus der Gruppe von Wasserstoff, Alkyl, Hydroxyalkyl oder Halogenalkyl entnommen ist.

8. Absorptionsmittel nach einem der vorhergehenden Ansprüche, **dadurch gekennzeichnet, dass** das Aminosäuresalz ein Salz eines Metalls (M) ist, insbesondere ein Salz eines Alkalimetalls mit einem Element aus der Gruppe Kalium oder Natrium, wobei in dem Aminosäuresalz in der Carboxylgruppe der Wasserstoff (H) durch das Metall (M) ersetzt ist.

9. Absorptionsmittel nach einem der vorhergehenden Ansprüche, **dadurch gekennzeichnet, dass** die freie Aminosäure einen Substituenten (R) aufweist, wobei der Substituent (R) eine Verbindung aus der Gruppe der Wasserstoff, Alkyl, Hydroxyalkyl oder Aminoalkyl ist.

10. Absorptionsmittel nach einem der vorhergehenden Ansprüche, **dadurch gekennzeichnet, dass** die freie Aminosäure weitere Substituenten (R1, R2) aufweist, wobei der weitere Substituent (R1, R2) aus der Gruppe von Wasserstoff, Alkyl, Hydroxyalkyl oder Halogenalkyl entnommen ist.

11. Verfahren zur Herstellung eines Absorptionsmittels, insbesondere ein Absorptionsmittel zur selektiven Absorption von Kohlendioxid aus einem Rauchgas einer Verbrennungsanlage, bei dem
(a) Aminosäure durch äquimolare Zugabe einer Lauge vollständig in ein Aminosäuresalz überführt wird,
(b) durch weitere Zugabe einer Aminosäure eine Mischung aus Aminosäuresalz und freier Aminosäure hergestellt wird, so dass Aminosäuresalz und freie Aminosäure koexistent vorliegen.

12. Verfahren nach Anspruch 11,
**dadurch gekennzeichnet, dass** dieses in wässriger Lösung durchgeführt wird.

13. Verwendung eines Absorptionsmittels enthaltend eine Mischung aus einem nebeneinander vorliegenden Aminosäuresalz und einer freien Aminosäure zur Absorption von Kohlendioxid aus einem Rauchgas einer Verbrennungsanlage.

14. Verwendung nach Anspruch 13,
bei der das Absorptionsmittel zunächst mit kohlendioxidhaltigem Abgas in Kontakt gebracht wird, so dass Kohlendioxid in dem Absorptionsmittel gelöst wird, so dass beladenes Absorptionsmittel gebildet wird, und bei der anschließend Kohlendioxid aus beladenes Absorptionsmittel thermisch desorbiert wird.

15. Verwendung nach Anspruch 13 oder 14,
bei der die Absorption von Kohlendioxid aus dem Rauchgas mit dem Absorptionsmittel bei einer niedrigeren Temperatur durchgeführt wird als die Desorption.
